Europäisches Patentamt

(19) European Patent Office

Office européen des brevets

(11) Publication number: **0 434 441 A2**

# (12) EUROPEAN PATENT APPLICATION

(21) Application number: 90314062.2

(22) Date of filing: 20.12.90

(51) Int. Cl.⁵: **B60J 7/10**

(30) Priority: 22.12.89 GB 8929112

(43) Date of publication of application:
26.06.91 Bulletin 91/26

(84) Designated Contracting States:
DE FR GB IT NL

(71) Applicant: AVON INDUSTRIAL POLYMERS
LIMITED
Bath Road
Melksham Wiltshire SN12 8AA (GB)
Applicant: BRAIDEX LIMITED
100 Princes Street
Petersborough,Cambridgeshire PE1 2QP (GB)

(72) Inventor: Rimes, David Walter Gidney
21 Kirtongate, Longthorpe
Peterborough, Cambridgeshire (GB)
Inventor: Boast, David
6 Chapel Path, Colerne
Chippenham, Wiltshire (GB)

(74) Representative: Harrison, David Christopher
et al
MEWBURN ELLIS 2 Cursitor Street
London EC4A 1BQ (GB)

(54) Tensioning straps and tension indicator therefor.

(57) To indicate a predetermined degree of ten-
sion in a strap (4) securing, for example, the
curtain side of a trailer or lorry an elastomeric
tube (9) is positioned between strap portions
(4a, 4b). Increased tension on the strap (4)
squeezes the tube (4). A predetermined degree
of approach, e.g. contact, between opposed
wall portions (11, 13) indicates a predetermined
tension on the strap. The tube (9) may be
retained in the strap in the absence of tension
by a bridge (20) through which a strap portion
passes.

Fig.2.

## TENSIONING STRAPS AND TENSION INDICATOR THEREFOR

This invention relates to a tension indicator and/or shock-absorbing link for a tensioning strap and also to the combination of the strap with such an indicator and/or link. The term "strap" is used functionally and includes both tape like entities e.g. webbing, and ropes or cables.

Numerous instances are known wherein tensioning straps are used to fasten down, bind or otherwise secure articles. One such example is in lorries or trailers having soft or "curtain" sides which are fixed into position using clamped straps. A typical vehicle of this type normally has a large number of such straps around its periphery to ensure that the sides are securely fastened all the way round. Such clamped straps may also be used in load restraint systems (eg. sheet or net form) in both curtain sided and rigid sided vehicles.

A major problem encountered with this kind of tensioning strap is that it is easy for over-tensioning to occur, resulting in damage to the strap, to the curtain running components and to the soft sheeting of the vehicle side. This problem is particularly pronounced in road vehicles, necessitating frequent, costly and time-consuming repair and/or replacement of straps. A major factor causing this over-tensioning of the straps has been found to be actual over-tensioning by the lorry driver or other person responsible for securing the sides of the vehicle. Damage may also be caused if sudden shock loads are applied.

An object of this invention is to provide a resilient link in or for a tensioning strap which can give an indication of a correct or acceptable tension in a tensioning strap.

In GB-A-1400436 and US-A-4757979 a tensioning strap and a tension indicator are shown, the tension indicator comprising an element sandwiched between sides of a flexible, essentially parallelogram; closed figure, tensioning of the strap causing the enclosed figure to elongate and squash the element between sides thereof. In GB-A-1400436 the element has the capacity to send a signal when a predetermined pressure (i.e. a predetermined tension) is attained.

The present invention provides a similar effect in a much simpler, cheaper and more robust form. Instead of the complex elements of the prior art, the element of the invention is an elastomeric body having opposed leg portions which are biassed by the resilience of the body to lie respectively in contact with sides of the closed figure which approach each other upon increase of tension. The elastomeric nature of the body itself resists this compression, such that a given degree of approach of the legs may visually indicate the attainment of a predetermined degree of tension. This degree of approach may be that of first contact of the mutually nearmost faces of the normally spaced-apart legs.

Though the legs may be of a C- or U- sectioned body, they are preferably mutually opposite portions of a hollow tube. Indeed, in its simplest form the resilient element is a cylindrical hollow tube made of a material of appropriate resilience so as to indicate visually a correct or acceptable tension in the strap when it is squashed to an appropriate degree, for example just as the hole in the tube is closed up. Rather than being arranged to be fully closed at the desired strap tension, the element may have moulded within it a gauge such as a prong or slab which will meet the opposite wall of the element. In an alternative form it is possible to provide an indicator which gives a visual measure of the tension in the strap over a range of tensions by observing the compression of the element, for example on a marked scale.

The straps used in conjunction with the tension indicator may be of conventional type, eg. rope or cable, plain, braided, woven, etc. It is required that a portion of the strap has two overlying portions to provide this close figure. These may conveniently be provided by a short separate section of strap attached at both its ends to the main strap, the form of attachment being of a conventional form, eg. sewing, adhesive, welding, etc.

The resilient element is sandwiched between the two overlying strap portions. It is preferably prevented from moving laterally and/or longitudinally with respect to the strap. This will usually be assisted by friction between the strap portions and the element by virtue of the squashing action exerted by the strap portions, and may also be assisted by the provision of centralising tabs or wings extending at one, preferably both, sides of the element into the gap between the two overlying strap portions on either/both sides of the element. These also limit or prevent rotation of the element. Lateral and/or longitudinal movement of the element may also be prevented by arranging the seams or other joins between the two overlying strap portions to be close up against the sides of the element, in which case centralising tabs or wings will usually not be required. It is also preferable that means are provided for preventing the element falling out from between the overlying strap portions, such as when the tension on the strap is released. Such means may be in the form of a bridge attached to one side of the element and having an aperture between it and the main wall of the element through which one of the overlying strap portions passes. Such a bridge may be provided on one or even both sides of the element. Such an aperture may have an opening so that the element may be fitted onto a preformed assembly of overlying straps.

The element itself may be made of any resilient material of the desired mechanical properties. In designing a suitable tension indicator for a particular application it will be necessary to use a material of the correct properties in order to give the desired quantitative measure of tension in the strap when the correct/appropriate strap tension has been reached. A rubber or other elastomer will usually be used. The element itself may be of any desired general cross-sectional shape, for example circular, rhomboid, square, rectangular, hexagonal, etc. It will be apparent that such an element, including any centralising tabs or wings, ribs and/or indicator means, may be easily manufactured, for example by an extrusion or a moulding process. Such processes are well known in the art.

Embodiments of the invention will now be described in detail with reference to the accompanying drawings, wherein :-

Figure 1 is a perspective view of a curtain-sided lorry ;

Figure 2 is a perspective of a twinning strap embodying the invention ;

Figure 3 is a cross-sectional view of one form of the combined strap/tension indicator ;

Figure 4 is a cross-sectional view of the combination of Figure 3, in which the strap has been tensioned and the tube of the tension indicator partially squashed ; and

Figure 5 is a perspective view of the combination shown in Figure 3 also showing an alternative indicator means.

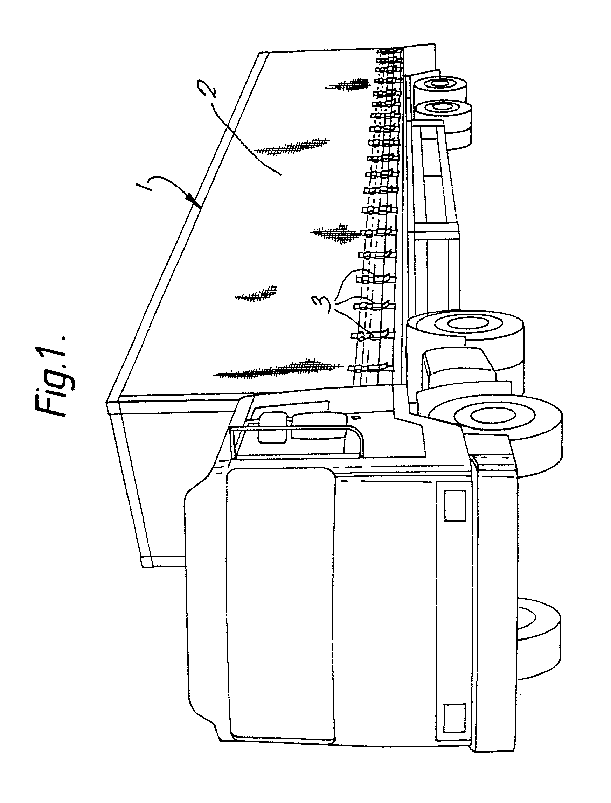

Figure 1 shows a lorry 1 with curtain-sides 2 held by an array of tensioning strap assemblies 3, to be described in more detail with reference to the remaining figures.

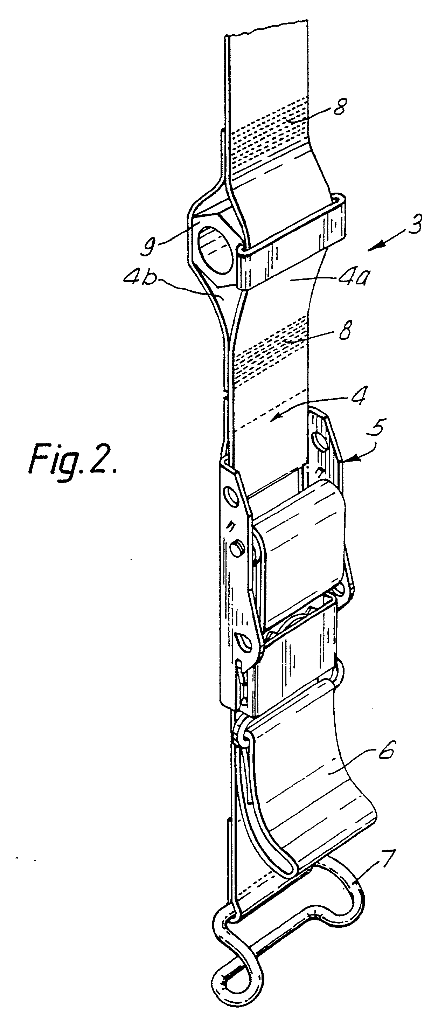

In Figure 2, the strap assembly 3 has a webbing tensioning strap which at 4a, 4b has overlying strap portions entrapping a yieldable element 9. The strap 4 is anchored to a housing of a one-way buckle 5. The strap assembly is hooked onto the lorry by claw 7 and tensioned by pulling on the strap loop 6 below the buckle 5.

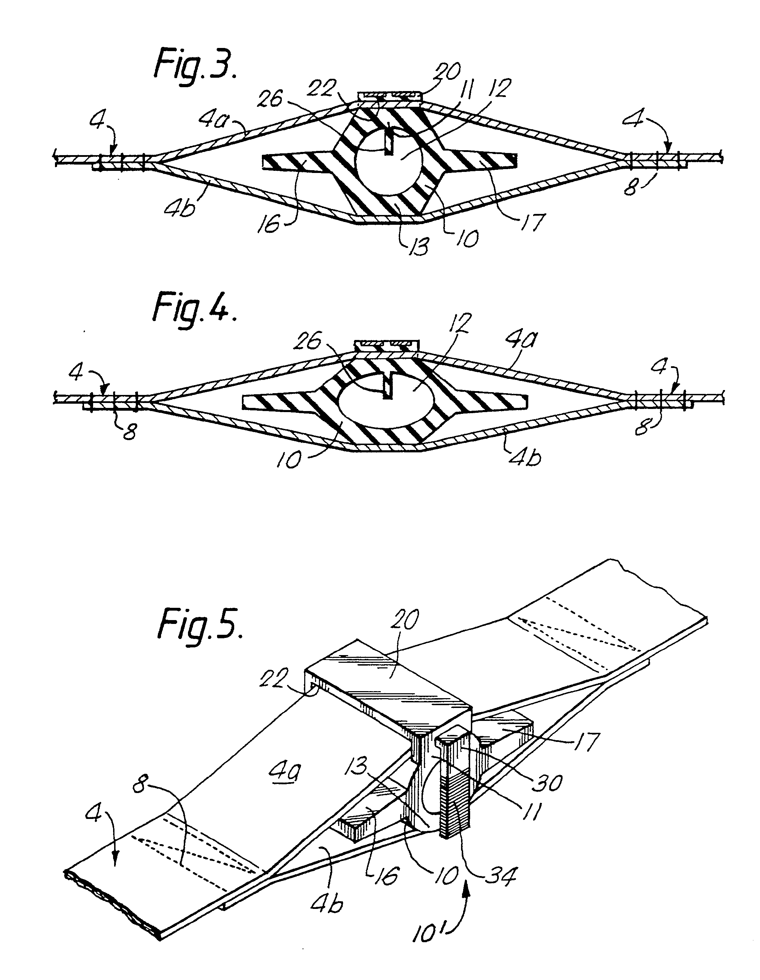

Referring now to Figures 2 to 4, at the regions where the strap portions 4a, 4b meet conventional attachment methods are used, here sewing 5. However, interweaving, adhesion, welding etc. may be used. Preferably, as here, the strap portion 4b does not form part of a continuous main run of the strap 4, being attached to the latter at both of its ends. Thus in the event of failure of the attachment, the strap 4 remains integral. Between the two strap portions 4a, 4b is an indicator element in the form of a tube 9, 10 of resilient material, eg. elastomer, the mechanical properties of the material being chosen so as to provide the desired measure of tension in the strap 4 when a particular condition is reached. Tube 9 has a simple hexagonal-section outer surface with a cylindrical hole 12, but extending away from and along the length of each side of the tube 10 is a centralising wing 16, 17, respectively, each of which is formed integrally with the main body of the tube 10. Along the length of the central part of the top of tubes 9, 10 is a bridge 20. Beneath the bridge 20, between it and the main body of the tube 9, 10, is an aperture 22 through which the strap portion 4a passes which overlies one portion 13 of the tube. The other strap portion 4b simply abuts the outer wall of the portion 11 of the tube 9, 10 diametrically opposite the bridge 20. Friction between the strap portions 4a, 4b and the respective outer walls of the tube 9, 10 assist the maintenance of the tube in the central region of the gap between the strap portions 4a, 4b. In the condition shown in Figure 2 and 3 the strap 4 is under virtually no or very little tension. Hence, the central hole 12 in the tube 9, 10 is substantially circular in cross-section. It will be understood that the exact design and shape of the indicator element may be varied to give the optimum performance for a specific application for which the device is to be used. In particular the outside of the tube can just as easily be arcuately cylindrical or any other desired shape. Less preferably, the element may be reduced to a C or U section.

Looking now at Figure 4, as the tension in the strap 4 is increased, (ie. by mutually outward force on the two ends of the strap portions 4a, 4b) the gap between the strap portions 4a, 4b contracts, thereby squashing the tube portion 11, 13 therebetween. If the tension in the strap 4 is increased further than that in the condition shown in Figure 4, then the deformation of the tube 10 will increase correspondingly, so that the hole 12, rather than being merely oval-shaped, may close up altogether. This closing-up may conveniently provide a visual indication to the person securing the strap that an appropriate strap tension has been reached. The exact tension necessary to achieve this condition will, of course, depend on the dimensions and the precise mechanical properties of the resilient material of the element, but can be readily determined empirically for any desired tension.

Figure 4 shows however how a gauge in the form of a prong 26 extends from an inner wall of the tube 10 into the central hole 12. Such a prong 26 may extend into the hole 12 from either portion 11 or portion 13 of the tube 10. Instead of a comparatively narrow prong, a raised rib or slab could project into the hole to act as the gauge. It should in any case extend substantially perpendicularly to the direction of tensile force in the strap 4.

Figure 5 shows in perspective the arrangement of Figure 4 wherein an alternative tension indicating means is employed. This means is in the form of an angled bar 30 attached at one of its ends to an end wall of the tube 10' or of the central bridge 20. One end 31 of the bar 30 is free from attachment to any other part of the device. When the tension in the strap 4 is increased and the tube 10′ is squashed between the strap portions 4a, 4b the diametrically opposite end wall part of the portion 13 of the tube 10′ will be displaced along. ie. relative to, the bar 30, and if the bar is provided with visual indicia, for example graduations 34, then the degree of movement of that end wall of the tube along the bar 30 will give a continuous visual indication of the amount of tension in the strap. This form of indicator may be especially useful where the strap-tension indicator combination is to be used in applications where different strap tensions may be desired.

Depending on the form of tension indicating means employed, if desired the tension indicator of this aspect of the invention may be labelled or marked by any suitable means, eg. embossing, printing, to indicate to the user the correct strap tension or range of strap tensions for which the indicator is to be used or the degree of approach which will occur at a given tension. When, for a given strap, a tension indicator of a specific range is required, then an appropriate indicator having the requisite mechanical properties from a set or kit of different indicators may be substituted.

The devices so far described are also applicable in their principle to another useful aspect, in that they provide a cushioning or shock-absorbing link in the tensioning strap 4, which can reduce shock loads to components that are connected via the link.

Although the present embodiments have particular use in the field of curtain-sided lorries or trailers, it is to be understood that the invention is useful in any application where tension straps are used and a means for visually indicating the strap tension or means for providing a cushioning or shock-absorbing link in the strap would be desirable.

## Claims

1. A tensioning strap (4) including a tension indicator, the indicator being an element (9, 10, 10′), sandwiched between sides (4a, 4b) of a closed figure of variable conformation, tensioning of the strap (4) causing the closed figure to elongate and squash the element progressively between sides thereof, characterized in that the element (9, 10, 10′) is an elastomeric body having portions (11, 13) normally biased apart by the resilience of the body to lie against strap portions (4a, 4b) forming the sides of the figure to be squashed together by tensioning of the strap (4), there being a gap between the portions whereby the degree of approach of the portions (11, 13) is a function of the tension exerted.

2. A tensioning strap (4) according to Claim 1, wherein the elastomeric body is a hollow tube (9, 10, 10′).

3. A tensioning strap (4) according to Claim 2, wherein the hollow tube (10, 10′) has stabilizing wings (16, 17) fitting within the closed figure for maintaining the tube (10, 10′) in a predetermined position and/or attitude in the closed figure.

4. A tensioning strap (4) according to any one of preceding claims ; wherein at least one side adjacent a said portion (11, 13) a bridge (20) is provided, the strap portion(s) (4a and/or 4b) passing through an aperture (22) between the bridge (20) and the portion (11, 13).

5. A tensioning strap (4) according to any one of preceding claims, wherein one of said strap portions (4a) is integral with a main run (4) of the strap on both sides of the indicator.

6. A tensioning strap (4) according to any one of preceding claims, wherein the element has a visual gauging means (26, 30) for aiding determination of the degree of approach of the portions (11, 13).

7. A tensioning strap (4) according to Claim 6 wherein the gauging means (26) is a projection in the gap between the portions (11, 13).

8. A tensioning strap (4) according to Claim 6, wherein the gauging means (3) is a member extending across the end face of the portions (11, 13).

9. A tensioning strap (4) according to Claim 8, wherein said member (30) has graduations (34) marked on it.

10. An element (9, 10, 10′) for a tensioning strap according to any one of the preceding claims.

11. A kit comprising a plurality of elements (9, 10, 10′) according to Claim 10 all adapted to fit within a given strap, different elements of that plurality adopting different degrees of said approach at a given tension.

12. A kit comprising a plurality of elements (9, 10, 10′) according to Claim 10 all adapted to fit within a given strap, different elements of that plurality adopting a same degree of approach at different given tensions.

Fig.1.

EP 0 434 441 A2

Fig.2.

Fig.3.

Fig.4.

Fig.5.